**Europäisches Patentamt**

**European Patent Office**

**Office européen des brevets**

(19)

(11) Veröffentlichungsnummer : **0 400 353 B1**

(12)

# EUROPÄISCHE PATENTSCHRIFT

(45) Veröffentlichungstag der Patentschrift :
**30.12.92 Patentblatt 92/53**

(51) Int. Cl.⁵ : **B65D 5/46,** B29C 45/14,
B29C 45/40, B29C 45/33

(21) Anmeldenummer : **90108490.5**

(22) Anmeldetag : **06.05.90**

(54) **Packung für fliessfähige Füllgüter mit angespritztem Griff, Verfahren zum Anspritzen des Griffes und Vorrichtung hierfür.**

(30) Priorität : **31.05.89 DE 3917609**

(43) Veröffentlichungstag der Anmeldung :
**05.12.90 Patentblatt 90/49**

(45) Bekanntmachung des Hinweises auf die
Patenterteilung :
**30.12.92 Patentblatt 92/53**

(84) Benannte Vertragsstaaten :
**AT BE CH DE DK ES FR GB GR IT LI LU NL SE**

(56) Entgegenhaltungen :
**EP-A- 0 232 207**
**EP-A- 0 257 281**

(73) Patentinhaber : **Tetra Alfa Holdings S.A.**
**70, Avenue Général-Guisan**
**CH-1009 Pully (CH)**

(72) Erfinder : **Reil, Wilhelm**
**Altengassweg 16**
**W-6242 Bensheim 1 (DE)**

(74) Vertreter : **Weber, Dieter, Dr. et al**
**Dr. Dieter Weber und Dipl.-Phys. Klaus Seiffert**
**Patentanwälte Gustav-Freytag-Strasse 25**
**Postfach 6145**
**W-6200 Wiesbaden 1 (DE)**

## Beschreibung

Die Erfindung betrifft eine Packung für fließfähige Füllgüter mit einem durch mindestens eine Längssiegelnaht gebildeten Tubus, an dessen Enden Boden und Deckel angebracht sind, von denen der Deckel wenigstens teilweise aus thermoplastischem Kunststoff ohne Trägermaterial besteht, an dem Tubus längs dessen Oberkante angespritzt ist und eine Ausgießeinrichtung aufweist, wobei der Tubus aus mindestens einseitig mit thermoplastischem Kunststoff beschichtetem Trägermaterial, z.B. Karton, besteht.

Ferner betrifft die Erfindung ein Verfahren zum Anspritzen eines Griffes aus thermoplastischem Kunststoff an den Kunststoffdeckel einer Packung, bei welchem der Formraum zwischen Innen- und Außenformteilen mit flüssigem Kunststoff gefüllt, gekühlt wird und der Spritzling danach entformt wird.

Weiterhin betrifft die Erfindung eine Vorrichtung zum Anspritzen eines Griffes in der vorstehend beschriebenen Weise, und diese Vorrichtung weist einen von zwei beweglichen Außenformteilen verschließbaren Formraum auf, dessen eine Grenzfläche die hintere Fläche des Steges des anzuspritzenden Griffes abschließt.

Packungen der eingangs genannten Art sind z.B. aus EP-A-0257281 bekannt. Für die gute Stapelbarkeit weist bei der bekannten Packung der angespritzte Deckel mindestens drei Ecken und zwei einen Winkel einschließende Ebenen auf, von denen die erste Ebene des Deckels parallel zur Ebene des Bodens liegt und die zweite Ebene mindestens teilweise aus dem Tubusmaterial gebildet ist und mit einem Griff verbunden ist, der einen oberen horizontalen und einen hinteren, der Ausgießkante diametral gegenüberliegenden vertikalen geraden Steg aufweist, welche seine Greiföffnung umfassen, und der mit dem Deckel verbunden und zusammen mit diesem innerhalb der quaderförmigen Außenkontur der Packung an der zweiten Ebene angespritzt ist. Durch die Unterbringung des Griffes innerhalb der Außenkontur der Packung ist letztere gut stapelbar, lagerfähig und kann auch in praktischer Weise in Umverpackungen gegeben werden.

Eine solche Packung, die hauptsächlich der Lagerung, dem Transport und der Distribution von Milch, Säften oder dergleichen Flüssigkeiten dient, wird in großen Stückzahlen auf Hochleistungsmaschinen hergestellt, mit welchen 1000 bis 1500 Pakkungen pro Stunde erzeugt, gefüllt und verpackt werden.

Es gibt zwar auch schon Packungen mit reinen Kunststoffdeckeln ohne Griff, die vorstehend beschriebene Packung mit am Deckel angespritztem Griff bietet aber dem Endverbraucher erhebliche Handhabungsvorteile. Zur preiswerten Herstellung der Packung wird schon im Fabrikationsprozeß versucht, möglichst wenig Kunststoff für die Erstellung des Deckels und des Griffes einsetzen zu müssen. Es ist bereits gelungen, die Hauptflächen des Deckels dünn auszugestalten, und auch die Griffe bekannter Packungen sind durch ein Rippenmuster sozusagen weitgehend hohl ausgestaltet, so daß für den Endbenutzer große Flächen für den Eingriff mit Hand und Finger vorgegeben sind und dennoch nur verhältnismäßig dünne Kunststoffstege die Verbindung der Greifflächen schaffen. Innerhalb des Griffes ergibt sich damit sozusagen ein kastenförmiges Strebeprofil.

Trotz dieser profilartigen Ausgestaltung des Griffes erkennt der Fachmann, der sich um die Herstellung derartiger Packungen bemüht, daß der Griff als solcher eine gewisse Kunststoffmasse enthält, die nach dem Anspritzen des Griffes an Deckel und Packungswand gekühlt und so entformt werden muß, daß keine Deformierung, Beschädigung oder gar Zerstörung des Griffes beim Entformen zu befürchten ist. Die Leistung einer Packungsherstellungsmaschine wird häufig durch den Anspritzvorgang von Griff und Deckel an einen Papiertubus beschränkt. Innen- und Außenformteile, welche den Tubus einerseits und den Deckelbereich sowie Deckel mit Griff andererseits umgreifen und den Formraum vorgeben, müssen geschlossen und nach dem Einspritzen des Kunststoffes ausreichend weit wieder geöffnet werden, um die Packung von der Position unter der Spritzeinheit zu entfernen und weiteren Verarbeitungsstationen zuzuführen. Es ist daher erwünscht, die Formteile möglichst schnell zu öffnen und folglich den Spritzling möglichst schnell zu entformen.

In denjenigen Bereichen, wo der Deckel an die Kanten des Papiertubus angespritzt ist, werden die nur aus thermoplastischem Kunststoff bestehenden Wandungen vom Papiermaterial gehalten. Die Stabilität des noch weichen und warmen, soeben erst gespritzten Deckels reicht aus, um Packung mit angespritztem Deckel von den Formteilen zu entfernen. Anders liegen die Verhältnisse im Bereich des Griffes, der über größere Strecken (2 bis 5 und vorzugsweise etwa 1 bis 3 cm) von versteifenden Tubusflächen entfernt ist. Würden die Außenformteile, mit welchen hauptsächlich der Griff spritzgeformt wird, zu früh auseinanderbewegt werden, bevor der Spritzling selbst ausreichend abgekühlt ist, dann hätte der Griff nicht die notwendige Stabilität und würde möglicherweise an dem einen oder anderen Werkzeugbacken hängenbleiben und auf diese Weise beim Entformen beschädigt oder zerstört werden. Der Fachmann hat bei der Herstellung solcher Packungen mit angespritztem Griff bisher eine gewisse Leistung infolgedessen nicht überschreiten können.

Aufgabe der vorliegenden Erfindung ist es daher, eine Packung der eingangs genannten Art, ein Verfahren zur Herstellung einer Fließmittelpackung und eine Vorrichtung zum Anspritzen eines Griffes an den Deckel einer solchen Packung zu schaffen, mit deren Hilfe eine höhere Stückzahl von angespritzten Einheiten pro Zeiteinheit ohne Beschädigung des Griffes beim Entformen möglich ist.

Für die Packung gelingt die Lösung der Aufgabe erfindungsgemäß dadurch, daß der vertikale Steg an seiner hinteren Fläche mit wenigstens einer Halteausnehmung versehen ist. An der fertigen Packung erkennt man die Halteausnehmung am Griff, nämlich an seinem vertikalen Steg außen, aber weder die Funktion des Griffes noch das Aussehen der Packung sind durch diese Halteausnehmung beeinträchtigt. Stattdessen erkennt der Fachmann den Vorteil der neuen Halteausnehmung, mit welcher nämlich der Griff längs einer kleinen Oberfläche in gewünschter Position gehalten werden kann, wenn eine Halterung von anderen Seiten im übrigen nicht möglich ist. Unter "kleiner" Fläche versteht man ein kleines Verhältnis zwischen der gesamten äußeren Oberfläche des Griffes und derjenigen Fläche, welche durch die Halteausnehmung gebildet wird. Dieses Verhältnis kann zwischen 1 und 20 %, vorzugsweise zwischen 5 und 10 % liegen.

Besonders vorteilhaft ist es dabei erfindungsgemäß, wenn die Halteausnehmung eine Haltenut ist und eine Breite von 1/15 bis 1/5 der Breite der hinteren Fläche des vertikalen Steges hat und in der Mitte der hinteren Fläche vertikal verlaufend angeordnet ist. Eine derart dünne Haltenut fällt möglicherweise einem unachtsamen Endverbraucher nicht ins Auge, so daß durch diese konstruktive Feinheit eine für den Hersteller erheblich vorteilhafte Halterungsmöglichkeit geschaffen ist, ohne daß der Endverbraucher beim Kauf oder beim Benutzen durch die nutenartige Halteausnehmung gestört würde. Im Gegenteil, beim Positionieren von Packungen auf Förderbändern bietet die neue Halteausnehmung den Vorteil, daß Werkzeuge leichter eingreifen und Drehverschiebungen vornehmen könnten.

Zweckmäßig ist es gemäß der Erfindung ferner, wenn die hintere Fläche des vertikalen Steges eben ist und die nutenförmige Halteausnehmung vorzugsweise etwa in der oberen, dem deckelseitigen Ende der Packung zugewandten Hälfte verläuft. Wenn der Fachmann beim Entformen ein Festhalten des Griffes schon in demjenigen Augenblick bewerkstelligen möchte, in welchem der Kunststoff noch nicht bis in das Zentrum der Spritzmasse vollständig durchgehärtet ist, genügt der schwache Eingriff eines fingerförmigen Halteelementes in die nutenförmige Halteausnehmung, um das Entformen frühzeitig vor endgültigem Durchkühlen der Kunststoffmasse durchzuführen, ohne daß der Griff umgebogen wird, weil er etwa an einem Werkzeugbacken hängenbleibt. Es hat sich gezeigt, daß mit Hilfe der neuen nutenförmigen Halteausnehmung eine Stückzahl pro Zeiteinheit unerwarteter Größe erreicht werden kann, in der Praxis 3000 Packungen pro Stunde.

Das Verfahren zum Anspritzen eines Griffes der vorstehend genannten Art ist erfindungsgemäß dadurch gekennzeichnet, daß der der Packungsmitte abgewandte Steg des Griffes während des Entformens mit einem Halteteil in Position gehalten wird, welches vorzugsweise im Verhältnis zum gesamten Griff klein ist, und daß der Steg danach auch von dem Halteteil außer Eingriff gebracht wird. Bei Beachtung der erfindungsgemäßen Lehre stellt der Fachmann fest, daß die äußere Haut der Kunststoffmasse im Bereich des Griffes nach dem Anspritzvorgang und nach verhältnismäßig kurzer Kühlzeit bereits fest ist, während sich die Kunststoffmasse im Inneren des Griffbereiches noch nicht ausgehärtet hat. Gerade auf die äußere Haut aber kommt es an, wenn nach der Überlegung der Erfindung das Halteteil während des Entformens den Steg des Griffes berührt und durch diesen Eingriff stabil in Position hält, so daß er seine steife Gestaltung beibehält, auch wenn die Außenformteile auseinanderbewegt werden und vielleicht sogar der größere Teil im Inneren der Kunststoffmasse des Griffes noch weich ist. Auf diese Weise kann man während der Herstellung die Abkühlzeit erheblich verringern und die Außenformteile, welche den Griff umfassen, früher öffnen. Man spart also beim Anspritzen Zeit und kann damit die Leistung der Packungsherstellungsmaschine erhöhen.

Vorteilhaft ist es gemäß der Erfindung ferner, wenn die hintere Fläche des Griffsteges während des Entformens von dem fingerförmig ausgestalteten Halteteil von außen berührt wird und das Halteteil danach relativ zur hinteren Fläche des Griffsteges gleitend herausgezogen wird. Im Falle der ebenen hinteren Fläche des vertikalen Steges des Griffes ist auch die nutenförmige Halteausnehmung gerade, und ein fingerförmig ausgestaltetes Halteteil kann zur Berührung des Griffsteges von außen verwendet werden, solange die Außenformteile, welche den Spritzling umfassen, auseinanderbewegt werden, d.h. während des Entformens. Selbstverständlich muß der Spritzling vollständig aus der Form entfernt werden können, und dazu kann auch das fingerförmige Halteteil nicht mit dem Griffsteg in Eingriff verbleiben. Gerade das gleitende Herausziehen eines Halteteiles relativ zur hinteren Fläche des Griffsteges erlaubt eine problemfreie Herstellung, Entformung und Separierung der Werkzeugteile vom Spritzling.

Die Vorrichtung zum Anspritzen der Packung mit den eingangs erwähnten Merkmalen weist einen von zwei beweglichen Außenformteilen verschließbaren Formraum auf, wobei die Innenformteile hier außer Betracht bleiben können, wenngleich der Formraum nach innen selbstverständlich von den Innenformteilen ebenfalls verschlossen werden muß. Erfindungsgemäß kommt es aber in der Hauptsache auf die beweglichen Außenformteile an, welche eine Grenzfläche vorgeben, welche die hintere Fläche des Steges des anzuspritzenden Griffes abschließt. Diese Grenzfläche ist also letztlich als Teil der Außenformteile zu verstehen, denn die Grenzfläche umfängt wenigstens zum Teil den Griff. Eine solche Vorrichtung ist nun erfindungsgemäß dadurch gekennzeichnet, daß die am Steg des Griffes anliegende Grenzfläche von einem gegenüber der Grenzfläche versetzt angeordneten Halteteil durchdrungen ist, welches gegenüber wenigstens einem der Außenformteile beweglich angetrieben ist. Der Fachmann weiß, daß der Spritzling dadurch entformt werden kann, daß man beispielsweise die zwei Außenformteile relativ zum Innenformteil mit Spritzling auseinander- und fortbewegt. Auch die den Griff zum Teil formende Grenzfläche des Werkzeuges gehört zu den Außenformteilen und wird entfernt. Während des Fortbewegens der Außenformteile wird erfindungsgemäß der Griff durch den Eingriff mit dem Halteteil in Position gehalten, damit er sich nicht verbiegt. Das Halteteil ist also relativ zu den Außenformteilen beweglich, wobei letztere einerseits geöffnet und vom Spritzling entfernt werden können, während das Halteteil an seiner Position verbleibt und den Griff stabil hält, wonach andererseits nach dem Wegbewegen der Außenformteile schließlich auch das Halteteil vom Spritzling entfernt werden muß. Dies erfolgt durch das oben erwähnte gleitende Herausziehen im Falle eines Griffes mit geradem Steg. Man kann sich zum Entfernen des Halteteiles auch Rollbewegungen, kreisförmige Schiebebewegungen und dergleichen vorstellen.

Erfindungsgemäß kann das Halteteil auch eine Nut, einen Stift oder eine Platte aufweisen. Gedacht ist z.B. an Löcher in der äußeren Fläche des Griffsteges, durch welche das Halteteil in Form eines oder mehrerer Finger hindurchgreift. Das Halteteil kann aber auch eine Nut aufweisen, so daß der Spritzling entsprechend eine kleine Wulst hat. Zweckmäßig ist erfindungsgemäß besonders aber eine Platte, die zwischen den Außenformteilen an der richtigen Stelle neben der Grenzfläche angeordnet ist. Eine solche Ausführungsform ist als besonders bevorzugt erfindungsgemäß dadurch gekennzeichnet, daß die Grenzfläche des Formraumes im wesentlichen eben und in Draufsicht rechteckig ist und daß das Halteteil als eine an einem oszillierend bewegbaren Träger befestigte ebene Platte mit durch die Grenzfläche in den Formraum hineinragendem, mittig angeordnetem Wulst ausgestaltet ist. Dieser Wulst liegt wie eine Rippe auf der äußersten Oberfläche der ebenen Platte. Eine solche, vom Werkzeug aus gesehen herausstehende wulstförmige Rippe gibt dann die in Verbindung mit der Packung oben beschriebene Haltenut vor. Der Träger ist parallel zu dem vorzugsweise vertikalen Steg des Griffes auf- und abbewegbar, so daß damit der rippenförmige Wulst oder das Halteteil ebenfalls auf- und abbewegbar ist, z.B. vom Innenformteil (Dorn eines Dornrades) nach oben wegbewegbar, wenn das Halteteil vom Spritzling außer Eingriff gebracht wird; und umgekehrt.

Die Bewegung einer Platte, mit oder ohne Wulst, eines Stiftes oder dergleichen relativ zu den benachbarten Außenformteilen ist auch im Betrieb der Hochleistungsmaschine ohne weiteres möglich, da zwischen den beweglichen Werkzeugteilen keine störende Reibung vorhanden ist. Vielmehr ist erfindungsgemäß ein Luftspalt von etwa 0.05 mm dazwischen vorgesehen, womit sich in der Praxis gezeigt hat, daß keinerlei Verschleiß und auch keine Störungen durch Reibung vorgegeben sind. Selbstverständlich weiß der Fachmann, daß gerade der Formraum für den Spritzvorgang nach außen dichtend abgeschlossen sein muß. Es wurde aber gefunden, wenn man derartig schmale Spalte in der Größenordnung von nur 0,05 mm verwendet, daß ein Durchdringen auch des heißen, flüssigen Kunststoffes durch die Spalte nach außen nicht zu befürchten ist.

Weitere Vorteile und Anwendungsmöglichkeiten der vorliegenden Erfindung ergeben sich aus der folgenden Beschreibung bevorzugter Ausführungsbeispiele in Verbindung mit den Zeichnungen. Es zeigen:

Figur 1 die Rückansicht einer Packung mit im Querschnitt viereckigem Tubus und oben angespritztem Deckel mit Griff,

Figur 2 eine Draufsicht auf die Packung der Figur 1,

Figur 3 eine abgebrochene Querschnittsansicht entlang der Linie III-III der Figur 1 nach dem Entformen,

Figur 4 eine Draufsicht auf zwei Außenformteile zur Herstellung eines Deckels, wie er in Figur 2 gezeigt ist,

Figur 5 einen teilweise gebrochen gezeigten Träger mit daran befestigter Platte und angebrachtem Halteteil und

Figur 6 eine Ansicht auf den Träger in Blickrichtung der Ansicht entlang der Pfeile VI-VI der Figur 5.

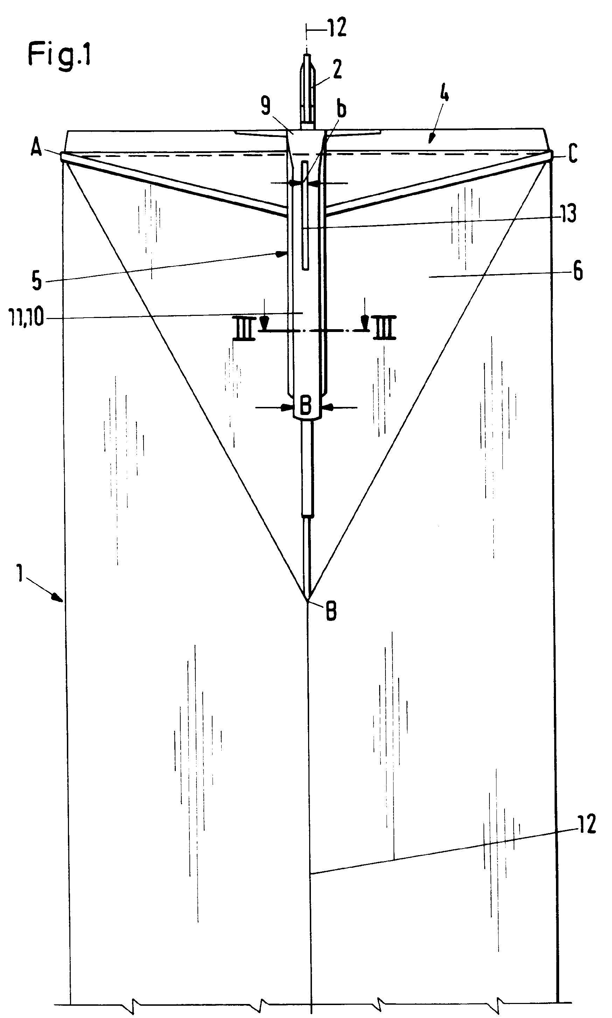

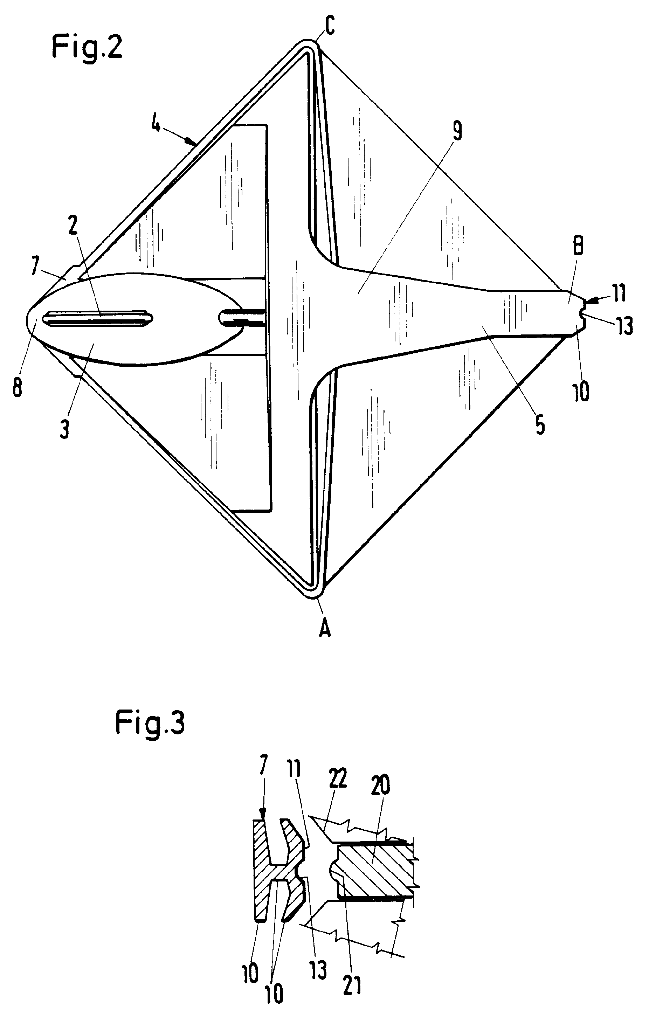

Die Packung ist im wesentlichen aus Figur 1 und ihr Deckel in Draufsicht aus Figur 2 zu sehen. Es handelt sich um eine Flüssigkeitspackung, deren aus mit Kunststoff beschichtetem Papier aufgebauter Tubus 1 im Querschnitt quadratisch ist. Unten ist der Tubus 1 abgeschnitten, denn der Aufbau des viereckigen Bodens, z.B. als Faltverschluß, ist für die Beschreibung des Ausführungsbeispieles hier nicht wesentlich. Innerhalb der Außenkontur der Verpackung, aus welcher lediglich ein Greifring 2 einer Aufreißlasche 3 heraussteht und für den Transport in den Bereich innerhalb der Außenkontur umgeklappt werden kann, befindet sich der allgemein mit 4 bezeichnete Deckel aus Kunststoff mit einem an diesem angespritzten Griff 5. Der Griff liegt in einem tetraederförmigen Raum innerhalb der Außenkontur, der durch drei Ecken A, B, C einer gemeinsamen Fläche 6 der Packung gelegt werden kann.

In Draufsicht gemäß Figur 2 sieht man links im Bereich der Ausgießeinrichtung mit Aufreißlasche 3 außen an der Spitze der Gießkante 7 die Tüllenspitze 8, und blickt man von der gegenüberliegenden Seite, in Figur 2 also von rechts nach links, dann sieht man die Packung der Figur 1.

Der am Deckel 4 angespritzte Griff 5 weist einen oberen horizontalen Steg 9 und einen der Ausgießkante 7 diametral gegenüberliegenden vertikalen Steg 10 auf, der im wesentlichen gerade ist. Dieser vertikale Steg 10 hat zwar in der Darstellung der Figuren 1 und 2, insbesondere in Figur 2, eine hintere ebene Fläche 11, aus der Querschnittsdarstellung der Figur 3 erkennt man aber, daß der Gesamtaufbau des Griffes 5 und insbesondere seines vertikalen Steges 10 profilartig ist. Dadurch wird Material gespart und die Schrumpfung beim Erstarren des Kunststoffes führt weniger zu Deformationen.

In Verlängerung der unteren Mittellinie 12 im Tubus der Pakkung gemäß Figur 1 nach oben läuft diese Mitte sowohl durch die hintere Fläche 11 des Steges 10 als auch über diese hinaus nach oben in den Greifring 2, wo nochmals strichpunktiert die Linie 12 angedeutet ist. Längs dieser Mitte 12 liegt in der hinteren Fläche 11 des vertikalen Steges 10 eine nutenförmig ausgebildete Halteausnehmung 13 etwa in der oberen, dem dekkelseitigen Ende der Packung zugewandten Hälfte, wie Figur 1 erkennen läßt. Die Breite b dieser nutenförmigen Halteausnehmung 13 beträgt etwa 1/5 der Breite B der hinteren Fläche 11 des Steges 10. Ist diese Fläche 11 etwa 10 mm breit, dann ist die Breite der nutenförmigen Halteausnehmung 13 2 mm breit.

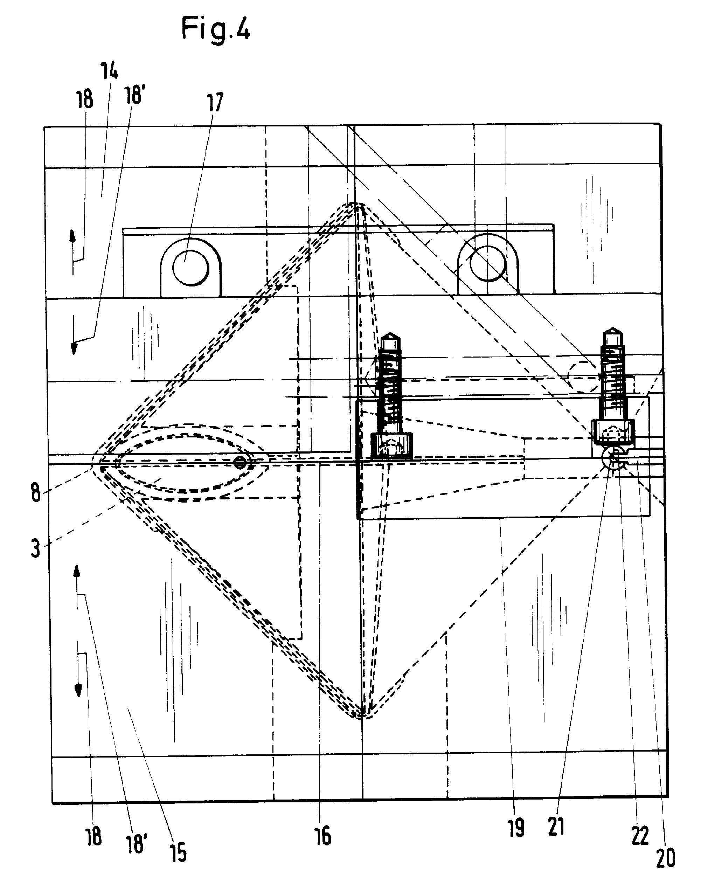

Das Werkzeugoberteil mit den zwei Außenformteilen 14 und 15 ist in Figur 4 dargestellt. Die durchgehende Trennlinie zwischen den zwei Außenform tei-len ist mit 16 bezeichnet. Diese sind über Befestigungselemente 17 so beweglich, daß sie in Richtung der Pfeile 18 zum Entformen auseinanderbewegt werden können und umgekehrt unter Bildung des nicht näher bezeichneten Formraumes in entgegengesetzter Richtung entlang der Pfeile 18' zusammengeführt werden können. Der Einsatz 19 dient der Anbringung der speziellen Formen für den Griff 7. Am rechten Rand der Figur 4 in der Mitte sieht man, wie eine mittig an einer Platte 20 angebrachte Wulst 21 in Rippenform durch die Grenzfläche 22 des Werkzeuges hindurch in den Formraum ragt.

Die wulstartige Rippe 21 ist auch in Figur 3 vorn an der Platte 20 angebracht gezeigt.

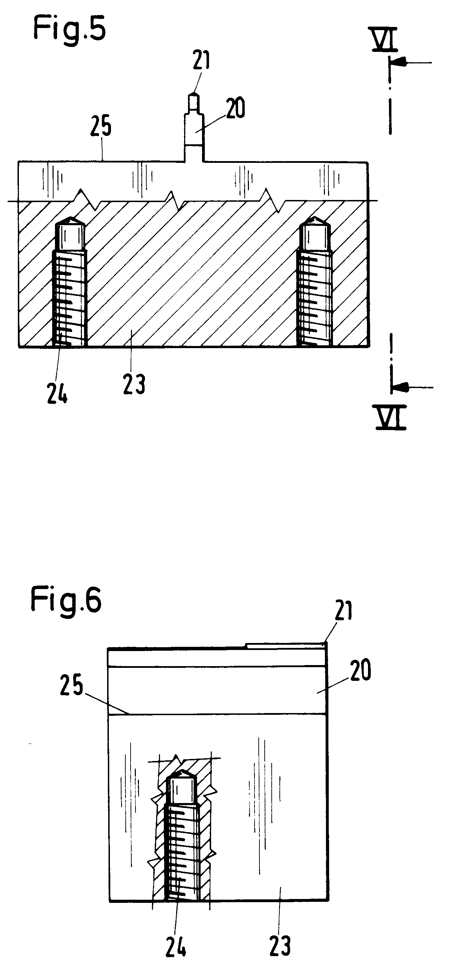

In Draufsicht und Seitenansicht sieht man den Träger 23 in den Figuren 5 und 6, welcher über Schrauben 24 an einer nicht dargestellten oberen Kopfplatte des Werkzeuges befestigt ist. Aus der vorderen Fläche 25 des Trägers 23 ragt mittig die Platte 20 heraus, die oben mit der wulstförmigen Rippe 21 versehen ist.

Im Betrieb sitzt der Tubus auf einem nicht dargestellten Dorn eines Dornrades als Innenformteil und wird unter die Spritzeinheit so bewegt, daß die Außenformteile 14 und 15 einerseits und die Platte 20 mit der Wulstrippe 21 andererseits zusammenfahren und den Formraum bilden, in welchen flüssiger Kunststoff unter Druck eingepreßt wird. Hierdurch füllt sich der Formraum und bildet den in Figur 2 dargestellten Deckel 4 mitsamt dem Griff 5. Nachdem wenigstens die Außenhaut der Kunststoffmasse erstarrt ist, können die Außenformteile 14, 15 in Richtung der Pfeile 18 auseinanderbewegt werden, während die Wulstrippe 21 in der nutförmigen Halteausnehmung 13 in Eingriff bleibt, so daß der Griff 5 stabil gehalten wird und nicht durch das Entformen deformiert werden kann. Die Abkühlung des jetzt freigelegten Kunststoffes schreitet in Kürze fort, so daß bereits kurze Zeit nach dem Auseinanderbewegen der Außenformteile 14, 15 der Träger 23 mitsamt Wulstrippe 21 vertikal nach oben in Richtung der Längsmittelachse 12 der Packung gleitend herausgezogen werden kann. Jetzt ist die Packung mit Deckel vollständig außer Eingriff und kann in eine andere Position bewegt werden.

**Patentansprüche**

1.  Packung für fließfähige Füllgüter mit einem durch mindestens eine Längssiegelnaht gebildeten Tubus (1), an dessen Enden Boden und Deckel (4) angebracht sind, von denen der Deckel (4) wenig-stens teilweise aus thermoplastischem Kunst-stoff ohne Trägermaterial besteht, an dem Tubus (1) längs dessen Oberkante angespritzt ist und eine Ausgießeinrichtung (3) aufweist, wobei der Tubus (1) aus mindestens einseitig mit thermo-plastischem Kunststoff beschichtetem Träger-material, z.B. Karton, besteht, der angespritzte Deckel (4) mindestens drei Ecken und zwei einen Winkel einschließende Ebenen aufweist, von denen die erste Eben des Deckels (4) parallel zur Ebene des Bodens liegt und die zweite Ebene (6) mindestens teilweise aus dem Tubusmaterial gebildet ist und mit einem Griff (5) verbunden ist, der einen oberen horizontalen (9) und einen hinteren, der Ausgießkante (7) diametral gegenüberliegenden vertikalen geraden Steg (10) aufweist, welche seine Greiföffnung umfassen, und der mit dem Deckel (4) verbunden und zusammen mit diesem innerhalb der quaderförmigen Außenkontur der Packung an der zweiten Ebene angespritzt ist, dadurch gekennzeichnet, daß der vertikale Steg (10) an seiner hinteren Fläche (11) mit wenigstens einer Halteausnehmung (13) versehen ist.

2.  Packung nach Anspruch 1, dadurch gekennzeichnet, daß die Halteausnehmung (13) eine Haltenut ist und eine Breite (b) von 1/15 bis 1/5 der Breite (B) der hinteren Fläche (11) des vertikalen Steges (10) hat und in der Mitte (12) der hinteren Fläche (11) vertikal verlaufend angeordnet ist.

3. Packung nach Anspruch 1 oder 2, dadurch gekennzeichnet, daß die hintere Fläche (11) des vertikalen Steges (10) eben ist und die nutenförmige Halteausnehmung (13) vorzugsweise etwa in der oberen, dem deckelseitigen Ende der Packung zugewandten Hälfte verläuft.

4. Verfahren zum Anspritzen eines Griffes (5) aus thermoplastischem Kunststoff an den Kunststoffdeckel (4) einer Pakkung nach Anspruch 1, bei welchem der Formraum zwischen Innen- und Außenformteilen (14, 15) mit flüssigem Kunststoff gefüllt, gekühlt wird und der Spritzling danach entformt wird, dadurch gekennzeichnet, daß der der Packungsmitte abgewandte Steg (10) des Griffes (5) während des Entformens mit einem Halteteil (13) in Position gehalten wird, welches vorzugsweise im Verhältnis zum gesamten Griff (5) klein ist, und daß der Steg (10) danach auch von dem Halteteil (13) außer Eingriff gebracht wird.

5. Verfahren nach Anspruch 4, dadurch gekennzeichnet, daß die hintere Fläche (11) des Griffsteges (10) während des Entformens von dem fingerförmig ausgestalteten Halteteil (13) von außen berührt wird und das Halteteil (13) danach relativ zur hinteren Fläche (11) des Griffsteges (10) gleitend herausgezogen wird.

6. Vorrichtung zum Anspritzen eines Griffes (5) aus thermoplastischem Kunststoff an den Kunststoffdeckel (4) einer Pakkung nach Anspruch 1, mit einem von zwei beweglichen Außenformteilen (14, 15) verschließbaren Formraum, dessen eine Grenzfläche (22) die hintere Fläche (11) des Steges (10) des anzuspritzenden Griffes (5) abschließt, dadurch gekennzeichnet, daß die am Steg (10) des Griffes (5) anliegende Grenzfläche (22) von einem gegenüber der Grenzfläche (22) versetzt angeordneten Halteteil (13) durchdrungen ist, welches gegenüber wenigstens einem der Außenformteile (14, 15) beweglich angetrieben ist.

7. Vorrichtung nach Anspruch 6, dadurch gekennzeichnet, daß das Halteteil (13) eine Nut, ein Stift oder eine Platte (20) aufweist.

8. Vorrichtung nach Anspruch 6 oder 7, dadurch gekennzeichnet, daß die Grenzfläche (22) des Formraumes im wesentlichen eben und in Draufsicht rechteckig ist und daß das Halteteil (13) als eine an einem oszillierend bewegbaren Träger (23) befestigte ebene Platte (20) mit durch die Grenzfläche (22) in dem Formraum hineinragendem, mittig angeordnetem Wulst (21) ausgestaltet ist.

## Claims

1. A package for flowable contents comprising, constituted by at least one longitudinal sealing seam, a tube (1) at the ends of which are mounted the bottom and the cover (4), of which the cover (4) consists at least partially of synthetic thermoplastics material with no carrier material, is injection moulded onto and along the top edge of the tube (1) and comprises a pouring device (3), the tube (1) consisting of a carrier material, e.g. cardboard, coated at least on one side with a synthetic thermoplastics material, the moulded-on cover (4) having at least three corners and, enclosing an angle, two planes of which the first plane of the cover (4) is parallel with the plane of the bottom and the second plane (6) is formed at least partially from the tube material and is connected to a handle (5) having an upper horizontal web (9) and, diametrically opposite the pouring edge (7), a vertical straight web (10), the said webs surrounding a handle aperture, the said handle being connected to the cover (4), together with which it is injection moulded onto the second plane and within the parallelepiped outer contours of the package, characterised in that the vertical web (10) is provided with at least one retaining recess (13).

2. A package according to claim 1, characterised in that the retaining recess (13) is a retaining groove and has a width (b) of 1/15th to 1/5th of the width (B) of the rear surface (11) of the vertical web (10) and is so disposed that it extends vertically in the middle (12) of the rear surface (11).

3. A package according to claim 1 or 2, characterised in that the rear surface (11) of the vertical web (10) is plane and in that the groove-like retaining recess (13) preferably extends substantially in the upper half, which is towards the cover end of the package.

4. A method of injection moulding a handle (5) consisting of synthetic thermoplastics material onto the synthetic plastics cover (4) of a package according to claim 1 in which the moulding space between.the inner and outer mould parts (14, 15) is filled with liquid synthetic plastics material, is cooled, after which the moulding is removed, characterised in that during removal from the mould, the web (10) of the handle (5) is held in position by a retaining part (13) which is preferably small in relation to the handle (5) as a whole and in that subsequently the web (10) is also disengaged from the retaining part (13).

5. A method according to claim 4, characterised in that during removal from the mould, the rear surface (11) of the handle web (10) is contacted from outside by the finger-shaped retaining part (13), after which the retaining part (13) is slidingly withdrawn in relation to the rear surface (11) of the handle web (10).

6. An apparatus for injection moulding a handle (5) of synthetic thermoplastics material onto the synthetic plastics cover (4) of a package according to claim 1 with a moulding space adapted to be occluded by two movable outer mould parts (14, 15) and of which one interface (22) closes off the rear surface (11) of the web (10) of the handle (5) which is to be moulded on, characterised in that the interface (22) which rests on the web (10) of the handle (5) is traversed by a retaining part (13) which is offset in relation to the interface (22) and which is driven for movement in relation to at least one of the outer mould parts (14, 15).

7. An apparatus according to claim 6, characterised in that the retaining part (13) comprises a groove, a peg or a plate (20).

8. An apparatus according to claim 6 or 7, characterised in that the interface (22) of the moulding space is substantially plane and is rectangular when viewed in plan and in that the retaining part (13) is constructed as a flat plate (20) fixed on an oscillatingly movable carrier (23) and having a centrally disposed bead (21) which projects through the interface (22) into the moulding space.

**Revendications**

1. Emballage pour produits de remplissage fluides comportant un tube (1) formé à l'aide d'au moins un joint longitudinal de scellement et aux extrémités duquel sont disposés un fond et un couvercle (4), parmi lesquels le couvercle (4) est constitué au moins en partie par une matière synthétique thermoplastique sans matériau de support, est moulé par injection sur le tube (1) le long de son bord supérieur et possède un agencement verseur (3), et dans lequel le tube (1) est réalisé par un matériau de support, par exemple du carton, qui est enduit au moins sur une face par une matière synthétique thermoplastique, le couvercle (4) moulé par injection possède au moins trois angles et deux plans enserrant un angle et parmi lesquels le premier plan du couvercle (4) est parallèle au plan du fond et le second plan (6) est formé au moins partiellement par le matériau du tube et est raccordé à une poignée (5), qui possède une barrette rectiligne horizontale supérieure (9) et une barrette rectiligne verticale arrière (10) diamétralement opposée au bord de versement (7), ces barrettes enserrant l'ouverture de préhension de la poignée, et qui est reliée au couvercle (4) et est moulée par injection conjointement avec ce dernier, au second plan, à l'intérieur du contour extérieur parallélépipédique de l'emballage, caractérisé par le fait que la barrette verticale (10) est pourvue, à sa surface arrière (11), d'au moins un évidement de retenue (13).

2. Emballage selon la revendication 1, caractérisé en ce que l'évidement de retenue (13) est une rainure de retenue et possède une largeur (b) comprise entre 1/15ème et 1/5ème de la largeur (B) de la surface arrière (11) de la barrette verticale (10) et est disposé verticalement en s'étendant dans le milieu (12) de la surface arrière (11).

3. Emballage selon la revendication 1 ou 2, caractérisé en ce que la surface arrière (11) de la barrette verticale (10) est plane et que l'évidement de retenue en forme de rainure (13) s'étend de préférence approximativement à peu près dans la moitié supérieure tournée vers l'extrémité de l'emballage située du côté du couvercle.

4. Procédé pour mouler par injection une poignée (5) en matière synthétique thermoplastique sur le couvercle en matière plastique (4) d'un emballage selon la revendication 1, dans lequel on remplit la cavité du moule entre les parties de moule intérieure et extérieure (14, 15) avec une matière synthétique liquide, on la refroidit et on démoule ensuite l'ébauche moulée, caractérisé en ce qu'on maintient en position la barrette (10), tournée vers le centre de l'emballage, de la poignée (5) pendant le démoulage au moyen d'un élément de retenue (13), qui de préférence possède une petite taille par rapport à l'ensemble de la poignée (5), et qu'on dégage ensuite également la barrette (10) de l'élément de retenue (13).

5. Procédé selon la revendication 4, caractérisé par le fait que la partie de retenue agencée en forme de doigt (13) est placée en contact extérieurement contre la surface arrière (11) de la barrette de préhension (10) pendant le démoulage et qu'on retire ensuite l'élément de retenue (13) en le faisant glisser par rapport à la surface arrière (11) de la barrette de préhension (10).

6. Dispositif pour mouler par injection une poignée (5) en matière synthétique thermoplastique sur le couvercle en matière plastique (4) d'un emballage selon la revendication 1, comportant une cavité de moule pouvant être fermée par deux parties extérieures de moule mobiles (14, 15) et dont une surface limite (22) ferme la surface arrière (11) de la barrette (10) de la poignée (5) devant être moulée par injection, caractérisé en ce que la surface limite (22), qui est adjacente à la barrette (10) de la poignée (5), est traversée par un élément de retenue (13), qui est décalé par rapport à la surface limite (22) et est déplaçable par rapport à au moins l'une des parties extérieures de moule (14, 15).

7. Dispositif selon la revendication 6, caractérisé en ce que l'élément de retenue (13) possède une rainure, une tige ou une plaque (20).

8. Dispositif selon la revendication 6 ou 7, caractérisé en ce que la surface limite (22) de la cavité de moule est essentiellement plane et rectangulaire selon une vue en plan et que l'élément de retenue (13) est agencé sous la forme d'une plaque plane (20) fixée à un support (23) pouvant être déplacé selon un mouvement oscillatoire, et comportant un renflement central (21) qui pénètre dans la cavité de moule en traversant la surface limite (22).

# Fig.1

Fig.2

Fig.3

# Fig.4

## Fig.5

21
20
25
VI
24
23
VI

## Fig.6

21
20
25
24
23